# EUROPÄISCHE PATENTSCHRIFT

(11) **EP 4 452 625 B1**
(45) Veröffentlichungstag und Bekanntmachung des Hinweises auf die Patenterteilung: **03.09.2025**
(21) Anmeldenummer: 22835220.9
(22) Anmeldetag: 07.12.2022
(51) Int. Cl.: B32B 1/08, B32B 5/26, B32B 27/12, B32B 27/28, B32B 27/40

(54) **HOCHDRUCKSCHLÄUCHE ZUR ABGABE VON WASSERSTOFF**
HIGH-PRESSURE HOSE FOR DISPENSING HYDROGEN
TUYAU HAUTE PRESSION POUR DISTRIBUER DE L'HYDROGÈNE

(30) Priorität: 23.12.2021 US 202163293162 P
(43) Veröffentlichungstag der Anmeldung: 30.10.2024
(73) Patentinhaber: ContiTech Deutschland GmbH, 30175 Hannover (DE)
(72) Erfinder: WIETZKE, Steffen, 30175 Hannover (DE); SCHMIDT, Alexander, 34497 Korbach (DE); BURROWES, Thomas George, Fairlawn, OH 44333 (US); MILLER, Lance, 44333 Fairlawn (US)
(74) Vertreter: Preusser, Andrea
(86) Internationale Anmeldenummer: PCT/EP2022/084716
(87) Internationale Veröffentlichungsnummer: WO 2023/117418

(56) Entgegenhaltungen:
- EP-A1- 1 090 242
- EP-A1- 3 627 026
- EP-B1- 1 090 242

## Beschreibung

Die vorliegende Erfindung betrifft einen Hochdruckschlauch mit einer Druckklassifizierung von H70 gemäß DIN ISO 19880-5 und/oder einem Berstdruck von mindestens 3500 bar, wobei der Schlauch einen Schichtaufbau mit einer Barriereschicht aus Polyketon, mindestens einer Festigkeitsträgerschicht und einer aus einem polymeren Werkstoff gebildeten äußeren Schicht aufweist. Die vorliegende Verfahren zur Herstellung solcher Schläuche, mit solchen Schläuchen ausgestattete Tankeinfüllvorrichtungen, und Verwendungen entsprechende Hochdruckschläuche zum, Überführen von Wasserstoff aus einem Vorratsbehälter in einen Tank.

### Stand der Technik

In den letzten Jahren hat die Entwicklung von Brennstoffzellenfahrzeugen einen wesentlichen Schub erfahren. Allerdings stellt Wasserstoff als Treibstoff erhebliche Anforderungen an die zur Vorhaltung und den Transport des Wasserstoffs verwendeten Materialien, die sich aus der kleinen Molekülgröße des Wasserstoffs ergeben. Einen Teilaspekt hierbei stellt die Entwicklung von Schläuchen dar, durch die ein Brennstoffzellenfahrzeug und dergleichen von einer in einer Wasserstoffstation installierten Zapfsäule mit Wasserstoffgas befüllt werden kann. Um die Fahrstrecke eines Brennstoffzellenfahrzeugs zu erhöhen muss dazu ein Kraftstofftank mit Wasserstoffgas unter hohem Druck befüllt werden. Daher müssen solche zum Befüllen mit Wasserstoff verwendeten Schläuche hohen Innendrücken von z.B. 70 MPa oder mehr bei einem relativ breiten Temperaturfenster (-40°C bis etwa 85°C auf der Fahrzeugseite) standhalten.

Materialien für die Innenschicht solcher Schläuche müssen eine Reihe von Anforderungen erfüllen, wie insbesondere eine geringe Durchlässigkeit für Wasserstoff, aber auch eine gewisse Flexibilität, damit der Schlauch von einem Anwender an das Kraftfahrzeug angeschlossen werden kann, und natürlich ausreichende Festigkeitseigenschaften. Als Barrierematerialien für eine innere Schlauchschicht wurden bisher unter anderem Nylon (z.B. in Form von Nylon 6, Nylon 66, oder Nylon 11), Polyacetal, oder Ethylenvinylalcoholcopolymer, oder NBR (Nitril-Butadienkautschuk) beschrieben.

Z.B. beschriebt die EP 3 627 026 A1 Wasserstoffkraftstoffschläuche mit einer inneren und äußeren Schicht und drei oder mehreren Verstärkungsschichten, die einen genau spezifizierten Flechtwinkel von 53.5 bis 55.5° aufweisen. In einem Ausführungsbeispiel der EP 3 627 026 A1 ist die innere Schicht aus Nylon und die äußere Schicht aus Polyester gebildet.

Die JP 2017-106553 A beschreibt Wasserstoffschläuche mit hohem Berstwidersstand, die neben inneren und äußeren Schichten Verstärkungsschichten aus Polyparaphenylenbenzbisoxazolfasern aufweisen, mit denen ein Gebrauchsdruck von 70 MPa erreicht werden kann.

Elaflex vertreibt einen Wasserstoffschlauch für Mobilitätsanwendungen, der eine zur Vermittlung von elektrischer Leitfähigkeit modifizierte innere NBR-Schicht, mehrere Schichten aus einem dehnungsarmen Textilgeflecht und einer äußeren Schicht aus Chloroprenkautschuk aufweist (sh. https://elaflex.de/dokumente/download/ElaflexInformation/ELAFLEX Information 1.20.pdf).

Darüber hinaus wurden Schläuche für Hochdruckanwendungen im Kontext der Förderung von Öl und Gas beschrieben, die starken Druckunterschieden und Zugkräften ausgesetzt sind, wenn sind unter der Wasseroberfläche eingesetzt werden. Z.B. offenbart die US 2001/021426 A1 ungebundene Schläuche mit einer flüssigkeitsundurchlässigen Barriereschicht, Verstärkungsschichten und einer äußeren Schicht. Als innerste Schicht weisen diese Schläuche einen flexiblen Metallzylinder auf, der die erforderliche mechanische Festigkeit und Flexibilität bereitstellen soll. Die Schläuche sind entsprechend für Anwendungen ausgelegt, bei denen hohe Drücke von außen auf den Schlauch wirken.

Da das Barriereschichtmaterial bei Schläuchen zur Durchleitung von Wasserstoff bei hohem Druck verschiedenen Anforderungen genügen muss, besteht das Problem der Bereitstellung von Materialien, die ein möglichst günstiges Gesamteigenschaftsprofil aufweisen. Z.B. weisen Ethylenvinylalcoholcopolymere zwar eine sehr geringe Durchlässigkeit gegenüber Wasserstoffgas auf, haben aber keine zufriedenstellenden mechanischen und Festigkeitseigenschaften (z.B. Zugfestigkeit, Bruchdehnung oder Kerbschlagzähigkeit). Polyamide wie Nylon 6 oder Nylon 11 haben zwar günstige Bruchdehnungs- oder Kerbschlagzähigkeits-Eigenschaften, bei diesen Materialien ist aber die Zugfestigkeit vergleichsweise gering und die Durchlässigkeit gegenüber Wasserstoffgas ebenfalls nicht zufriedenstellend. Andere Materialien wie PEEK (= Polyetheretherketon) haben zwar sehr günstige mechanische Eigenschaften und insbesondere eine sehr hohe Zugfestigkeit, sind aber nur bei sehr hohen Temperaturen von mehr als 340°C verarbeitbar und haben eine nicht zufriedenstellende Wasserstoffdurchlässigkeit.

Vor dem Hintergrund dieses Standes der Technik besteht ein Bedarf für ein Barrierematerial, dass gegenüber Wasserstoff eine möglichst geringe Durchlässigkeit aufweist und dass gleichzeitig günstige Flexibilitäts- und mechanische Eigenschaften vermittelt und bei geringeren Temperaturen verarbeitet werden kann als z.B. PEEK. Weiterhin sollte ein solches Material möglichst eine Einarbeitung von Additiven zur Vermittlung von elektrischer Leitfähigkeit erlauben, ohne dass dadurch die mechanischen und Durchlässigkeitseigenschaften des Materials wesentlich beeinträchtigt werden.

Die vorliegende Erfindung befasst sich mit diesem Bedarf.

### Beschreibung der Erfindung

In den dieser Erfindung zugrundeliegenden Untersuchungen haben die Erfinder überraschend festgestellt, dass ein aliphatisches Polyketon ein sehr günstiges Eigenschaftsprofil mit geeigneten Flexibilitäts- und mechanischen Eigenschaften und einer geringen Wasserstoffdurchlässigkeit aufweist, und darüber hinaus über Extrusion verarbeitbar ist und den Einbezug von Additiven zur Vermittlung von elektrischer Leitfähigkeit erlaubt.

Demzufolge betrifft die vorliegende Erfindung gemäß einem ersten Aspekt einen Hochdruckschlauch mit einer Druckklassifizierung von H70 gemäß DIN ISO 19880-5 und/oder einem Berstdruck von mindestens 3500 bar, wobei der Schlauch einen Schichtaufbau mit einer inneren Barriereschicht, mindestens einer Festigkeitsträgerschicht und einer aus einem polymeren Werkstoff gebildeten äußeren Schicht aufweist und wobei die Barriereschicht aus einem aliphatischen Polyketon der Formel

[[-CHR₁CH₂(C=O)-]ₙ[-CHR₂CH₂(C=O)-]ₘ]ₚ

gebildet ist, wobei R₁ und R₂ voneinander verschieden sind und unabhängig voneinander Wasserstoff oder eine C₁-C₁₂-Alkylgruppe bedeuten, n+m=1, und p eine ganze Zahl ist, und wobei die beiden Comonomere statistisch verteilt sind oder als Blocks vorliegen.

In Bezug auf die Druckklassifizierung "H70" ist anzumerken, dass in der DIN ISO 19880-5 eine Reihe von Vorgaben gemacht werden (z.B. zu elektrischen Leifähigkeiten), die in der Erfindung nicht zwangsläufig eingehalten werden müssen. Der Verweis auf die Druckklassifizierung H70 ist im Kontext der hier beschriebenen Erfindung in erster Linie als Verweis auf einen minimalen Berstdruck, der von einem H70 Schlauch erreicht werden muss, zu verstehen. Vorzugsweise sollte ein solcher Schlauch aber auch die Vorgabe eines Betriebsdrucks (HSL = Hydrogen service level) gemäß DIN ISO 19880-5 für einen H70 Schlauch erfüllen, der bei 700 bar liegt.

Im angegebenen aliphatischen Polyketon ist, wenn R₁ und/oder R₂ eine C₁-C₁₂-Alkylgruppe bedeutet, die C₁-C₁₂-Alkylgruppe vorzugsweise ausgewählt aus Methyl-, Ethyl-, Propyl-, Pentyl- oder Heptyl-.

In eine besonders bevorzugten Ausführungsform ist R₁ eine Methylgruppe und R₂ ist H.

Wenn R₁ eine C₁-C₁₂-Alkylgruppe ist, ist "n" vorzugsweise kleiner als 0,5, insbesondere kleiner als 0,1, und besonders bevorzugt zwischen 0,02 und 0,08; für solche Werte von n ist es bevorzugt, wenn R₁ eine Methylgruppe und R₂ ist H. In einer anderen Ausführungsform ist n = 0 und R₂ ist hat, in diesem Fall liegt das aliphatisches Polyketon als Poly(ethylenketon) vor.

"p" ist vorzugsweise eine ganze Zahl zwischen 500 und 5000.

In einer Ausgestaltung der vorliegenden Erfindung ist das aliphatische Polyketon halbkristallin. Eine partielle Kristallinität lässt sich anhand von DSC Messungen des Polymers nachweisen.

In einer bevorzugten Ausführungsform der vorliegenden Erfindung enthält das aliphatische Polyketonpolymer mindestens 80 Vol.-%, insbesondere mindestens 90 Vol.-%, und besonders bevorzugt mindestens 95 Vol.-% der Struktureinheiten (I) und (II).

In einer bevorzugten Ausgestaltung der vorliegenden Erfindung hat das aliphatische Polyketon eine Schmelztemperatur zwischen 200°C und 250°C, vorzugsweise 210°C bis 240°C. Weiterhin ist es im Rahmen der vorliegenden Erfindung bevorzugt, wenn das aliphatische Polyketon ein gewichtsmittleres Molekulargewicht M_{w} von mindestens 40.000 g/mol, und insbesondere mindestens 60.000 g/mol aufweist. In einer ganz besonders bevorzugten Ausführungsform der vorliegenden Erfindung weist das aliphatische Polyketon ein Molekulargewicht von mindestens 200.000 g/mol auf.

In einer bevorzugten Ausgestaltung der vorliegenden Erfindung hat das aliphatische Polyketon ein gewichtsmittleres Molekulargewicht M_{w} von 140000 g/mol bis 410000 g/mol, weiter bevorzugt ein gewichtsmittleres Molekulargewicht von 150000 g/mol bis 210000 g/mol oder von 290000 g/mol bis 400000 g/mol und ganz besonders bevorzugt ein gewichtsmittleres Molekulargewicht von 160000 g/mol bis 200000 g/mol oder von 300000 g/mol bis 390000 g/mol. Das Gewichsmittlere Molekulargewicht M_{w} ist hier mittels GPC unter Verwendung geeigneter Standards (z.B. Polystyrol) zu bestimmen.

Ein kommerziell erhältliches aliphatisches Polyketon, das für die Herstellung der Barriereschicht der erfindungsgemäßen Hochdruckschläuche verwendet werden kann, sind die von Hyosung unter der Handelsbezeichnung POKETONE vertriebenen Produkte.

In einer besonders bevorzugten Ausführungsform weist das Polyamid der Barriereschicht insgesamt eine Gasdurchlässigkeit für Wasserstoff (H₂) von 1750 cm³/(m²*d) oder weniger (bestimmt gemäß DIN 53880 (2006) bei 30°C und 30 bar, 0% relative Feuchtigkeit)), insbesondere 1500 cm³/(m₂*d) oder weniger und besonders bevorzugt 1350 cm³/(m₂*d) oder weniger auf.

Das aliphatische Polyketon kann beispielsweise durch Extrusion verarbeitet werden.

Das aliphatische Polyketon in der Barriereschicht kann zusätzlich ein oder mehrere Zusatzstoffe enthalten, die ausgewählt sind aus einem oder mehreren von Antioxidationsmitteln, Wärmestabilisatoren, Ultraviolettabsorptionsmitteln, Lichtstabilisatoren, Gleitmitteln, anorganischen Füllstoffen, antistatischen Mitteln, Flammschutzmitteln, Kristallisationsbeschleunigern, Weichmachern, Farbstoffen, Schlagzähigkeitsverbesserern und dergleichen.

Die Barriereschicht weist eine für die Erzielung der gewünschten Gasdurchlässigkeit angepasste Dicke auf. Bevorzugt weist die Barriereschicht eine Dicke von mindestens 0,2 mm und weniger als 2,0 mm auf, wobei eine Dicke im Bereich von 0,5 bis 1,5 mm bevorzugt ist. Der Innendurchmesser der Barriereschicht beträgt bevorzugt mindestens 6 mm liegt weiter bevorzugt im Bereich von 7 mm bis 12 mm.

Zur Vermittlung von elektrischer Leitfähigkeit kann die Barriereschicht einen elektrisch leitfähigen Zusatz- bzw. Füllstoff enthalten.

Geeignete elektrisch leitende Zusatz- oder Füllstoffe sind alle Füllstoffe, die dem Polyamid elektrisch leitende Eigenschaften verleihen können, z.B. teilchenförmige, flockige oder faserige Füllstoffe.

Beispiele von geeigneten teilchenförmigen Füllstoffen sind Ruß und Graphit. Beispiele für flockige Füllstoff, der zweckmäßig verwendet werden können, sind Aluminiumflocken, Nickelflocken und nickelbeschichteter Glimmer. Beispiele von faserigen Füllstoffen umfassen Kohlefasern, Carbon Nanotubes, mit Kohlenstoff beschichtete Keramikfasern, Kohlewhisker und Metallfasern, wie Aluminiumfasern, Kupferfasern, Messingfasern und Edelstahlfasern. Von diesen wird Ruß und ein Gemisch von Ruß und Carbon Nanotubes als elektrische Leitfähigkeit vermittelnder Füllstoff am meisten bevorzugt.

Ruß, der in der vorliegenden Erfindung verwendet werden kann, umfasst alle Ruße, die im Allgemeinen verwendet werden, um elektrische Leitfähigkeit zu verleihen. Bevorzugte Beispiele des Rußes umfassen, sind aber nicht beschränkt auf Acetylenruß, erhalten durch die vollständige Verbrennung von Acetylengas, Ketjen-Ruß, der durch die Ofentyp-unvollständige Verbrennung ausgehend von Rohöl hergestellt wird, Ölruß, Naphthalinruß, Thermalruß, Lampenschwarz, Kanalschwarz, Rollenschwarz und Scheibenschwarz. Von diesen werden Acetylenruß und Ofenruß (Ketjen-Ruß) stärker bevorzugt.

Was den Ruß angeht, werden verschiedene Kohlenstoffpulver hergestellt, die sich in den Eigenschaften wie Teilchengröße, Oberfläche, DBP-Absorption und Aschegehalt unterscheiden. Der Ruß, der in der vorliegenden Erfindung verwendet werden kann, ist hinsichtlich dieser Eigenschaften nicht besonders eingeschränkt, jedoch werden solche mit einer guten Kettenstruktur und einer großen Aggregationsdichte bevorzugt. Im Hinblick auf die Schlagzähigkeit wird der Ruß vorzugsweise nicht in einer großen Menge eingemischt. Um eine ausgezeichnete elektrische Leitfähigkeit mit einer geringeren Menge zu erhalten, beträgt die durchschnittliche Partikelgröße von Ruß vorzugsweise 500 nm oder weniger, weiter bevorzugt 5 bis 100 nm, und noch weiter bevorzugt 10 bis 70 nm, die Oberfläche (um BET-Verfahren) beträgt vorzugsweise 10 m²/g oder mehr, weiter bevorzugt 300 m²/g oder mehr, und noch weiter bevorzugt 500 bis 1.500 m²/g, und die DBP (Dibutylphthalat)-Absorption beträgt vorzugsweise 50 ml/100g oder mehr, weiter bevorzugt 100 ml/100 g oder mehr, und noch weiter bevorzugt 300 ml/100 g oder mehr. Der Aschegehalt von Ruß beträgt vorzugsweise 0,5% oder weniger, und weiter bevorzugt 0,3% oder weniger. Die DBP-Absorption, wie sie hier verwendet wird, bezeichnet einen Wert, der nach dem in ASTM-D2414 vorgeschriebenen Verfahren gemessen wird. Ein Ruß mit einem Gehalt an flüchtigen Bestandteilen von weniger als 1,0 Gew.-% wird stärker bevorzugt.

Der elektrisch leitfähige Füllstoff kann mit einem Oberflächenbehandlungsmittel, wie einem Oberflächenbehandlungsmittel vom Titanat-, Aluminium- oder Silantyp, oberflächenbehandelt sein. Außerdem kann der elektrisch leitende Füllstoff teilchenförmig sein, um die Verarbeitbarkeit bei einem Schmelzkneten mit dem aliphatischen Polyketon zu verbessern.

Die Menge des eingemischten elektrisch leitenden Füllstoffs ist in Abhängigkeit von der Art des Füllstoffs variabel und kann nicht unabhängig davon angegeben werden, jedoch kann im Hinblick auf das Gleichgewicht von elektrischer Leitfähigkeit, Schmelzfließfähigkeit und mechanischer Festigkeit ein Anteil an elektrisch leitfähigem Füllstoff 3 bis 30 Gewichtsteilen bezogen auf 100 Gewichtsteile von aliphatisches Polyketon als günstig angegeben werden.

Um eine ausreichend hohe antistatische Leistung zu erhalten, wird der elektrisch leitende Füllstoff vorzugsweise in einer solchen Menge eingemischt, dass der durch Schmelzextrudieren der den elektrisch leitenden Füllstoff enthaltenden Polyketonzusammensetzung erhaltene Formkörper eine für die Ableitung von statischen Ladungen geeignete Leitfähigkeit aufweist. Das Einmischen des elektrisch leitenden Füllstoffs führt jedoch leicht zu einer Verringerung der mechanischen Festigkeit und der Schmelzfließfähigkeit, so dass die Menge auf die für das angestrebte Niveau der elektrischen Leitfähigkeit erforderliche Mindestmenge zu begrenzen ist.

Die Barriereschicht aus dem aliphatischen Polyketon bildet in aller Regel die innerste Schicht des Hochdruckschlauchs, in Einzelfällen kann jedoch ein anderes polymeres Material die innerste Schicht bilden und die Barriereschicht aus dem aliphatischen Polyketon kann auf dieser angeordnet sein. In diesem Fall weist das andere Material meist eine höhere Durchlässigkeit für Wasserstoff auf als die Barriereschicht aus dem aliphatischen Polyketon. Aufgrund des negativen Einflusses von Wasserstoff und auf Metall und insbesondere Stahl bei hohem Druck, ist die innerste Schicht des erfindungsgemäßen Hochdruckschlauchs keine Metallschicht und insbesondere keine Stahlschicht.

Zudem kann der erfindungsgemäße Hochdruckschlauch weitere Polymerschichten zwischen der inneren Barriereschicht und Verstärkungsschichten, zwischen Verstärkungsschichten oder zwischen der äußersten Verstärkungsschicht und der aus einem polymeren Werkstoff gebildeten äußeren Schicht aufweisen.

Der erfindungsgemäße Hochdruckschlauch enthält neben der Barriereschicht aus aliphatischem Polyketon zusätzlich mindestens eine Festigkeitsträgerschicht, wobei mehrere Festigkeitsträgerschichten, d.h. z.B. zwei, drei, vier, fünf oder sechs Festigkeitsträgerschichten bevorzugt sind. Für bevorzugte Ausgestaltungen von Festigkeitsträgerschichten und deren Anordnungen kann auf die entsprechenden Ausführungen hierzu beispielsweise in EP 3 627 026 A1 verwiesen werden.

Ein oder mehrere Festigkeitsträgerschichten sind in einer Ausführungsform aus einem gewebten, gestrickten oder geflochtenen Fasermaterial gebildet, wobei die Fasern ausreichend stabil sind und eine zum Abfangen von hohen Innendrücken geeignete Festigkeit aufweisen. Bevorzugt sind hier Fasern mit einer Zugfestigkeit, bestimmt gemäß DIN EN ISO 2062 (2010), von mindestens 2 GPa. Die Fasern können aus einem organischen Polymer, z.B. aus Polyamid, Polyester, oder Polyethylen mit höherem Molekulargewicht, z.B. von mehr als 3.000.000 (UHMWPE) gebildet sein. In einer Ausführungsform beruhen die Fasern auf Polyparaphenylenbenzobisoxazol oder UHMWPE. Der oder die Festigkeitsträger kann vorteilhaft auch als Kord oder Band aus den genannten Materialien mit unidirektionaler Ausrichtung ausgebildet sein, insbesondere wenn der Festigkeitsträger aus UHMWPE gebildet ist.

Alternativ oder zusätzlich kann eine oder mehrere Festigkeitsträgerschicht(en) aus Metalldraht oder Metallband gebildet sein, wobei insbesondere Metalldrähte und -bänder aus Stahl, Kupfer oder Kupferlegierung (gemäß JIS H 3260), Aluminium oder Aluminiumlegierung (gemäß JIS H 4040), Magnesiumlegierung (gemäß JIS H 4203), Titan oder Titanlegierung (gemäß JIS H 4670) verwendet werden können.

Der polymere Werkstoff, der die Außenschicht des erfindungsgemäßen Hochdruckschlauchs bildet, unterliegt keine relevanten Beschränkungen, mit der Maßgabe, dass das Material ausreichend flexibel und über die Gebrauchstemperatur des Schlauchs stabil sein sollte. Bevorzugte polymere Werkstoffe sind hier beispielsweise Kautschuke, wie Chloropren-Kautschuk, Chloroprenacrylat-Kautschuk, Butyl-Kautschuk, Ethylen-Propylen-Kautschuk, chlorosulfonierter Polyethylen-Kautschuk, oder thermoplastisches Polyurethanelastomer und thermoplastische Materialen, wie Polyurethan, Polyamid, z.B. Polyamid 12, oder Polyester.

Die Außenschicht weist zweckmäßig eine Dicke im Bereich von mindestens 0,2 mm und 1,5 mm oder weniger auf, wobei eine Dicke im Bereich von mindestens 0,5 mm und 1.0 mm oder weniger bevorzugt ist. Der Außendurchmesser der Außenschicht unterliegt keinen relevanten Beschränkungen, wird aber meist mindestens 12 mm und 18 mm oder weniger betragen.

Die Außenschicht kann kontinuierlich ausgebildet sein. Alternativ kann die Außenschicht Perforationen aufweisen, über die von innen nach außen im Schlauch durchtretende Gase, insbesondere in Form von Wasserstoff, austreten können um die Bildung von Blasen oder Delamination zu vermeiden.

Ein einer Ausführungsform sind ein oder mehrere Schichten des Schlauchs "verbunden", d.h. ein Gleiten der Schichten gegeneinander in Längsrichtung des Schlauchs wird durch die Verbindung verhindert. In erfindungsgemäßen Schlauch kann z.B. die Barriereschicht mit angrenzenden Verstärkungsschichten verbunden sein oder es kann die äußerste Verstärkungsschicht mit der aus einem polymeren Werkstoff gebildeten äußeren Schicht verbunden sein. Zudem können auch alle Schichten im Schlauch (gegebenenfalls mit Ausnahme der Verstärkungsschichten untereinander) miteinander verbunden sein.

In einem weiteren Aspekt betrifft die vorliegende Erfindung ein Verfahren zur Herstellung eines wie vorstehend beschriebenen Hochdruckschlauchs, dass die folgenden Schritte umfasst:
- Aufbringen einer Schicht aus aliphatischem Polyketon auf einen Dorn oder dornlos unter Ausbildung eines Polyketonschlauchs;
- Aufbringen von einer oder mehreren Festigkeitsträgerschichten auf dem Polyketonschlauch;
- Aufbringen einer äußeren Schicht aus einem polymeren Werkstoff auf die eine oder mehreren Festigkeitsträgerschichten.

Das Aufbringen des aliphatischen Polyketons auf den Dorn oder dornlos erfolgt in der Regel aus der schmelze, z.B. durch Extrusion.

In einem weiteren Aspekt betrifft die vorliegende Erfindung eine Tankeinfüllvorrichtung, die einen wie vorstehend beschriebenen Hochdruckschlauch umfasst. Neben dem Schlauch umfasst die Tankeinfüllvorrichtung zweckmäßig eine Abgabevorrichtung für durch die Vorrichtung geleiteten Kraftstoff und eine Verschlussvorrichtung, um die Abgabevorrichtung druckdicht mit einem Behälter, in die ein Kraftstoff (d.h. insbesondere Wasserstoff) eingeführt werden soll, zu verbinden. In einem weiteren Aspekt betrifft die vorliegende Erfindung die Verwendung eines wie vorstehend beschriebenen Hochdruckschlauchs zum Überführen von Wasserstoff aus einem Vorratsbehälter in einen Tank. Bei dem Tank handelt es sich besonders bevorzugt um den Tank eines Flugzeugs, Schiffs, oder Fahrzeugs, wie eines Personenkraftwagens, Lastkraftwagens oder Schienenfahrzeugs.

In einem weiteren Aspekt betrifft die vorliegende Erfindung die Verwendung eines aliphatischen Polyketons der Formel

[[-CHR₁CH₂(C=O)-]ₙ[-CHR₂CH₂(C=O)-]ₘ]ₚ

wobei R₁ und R₂ voneinander verschieden sind und unabhängig voneinander Wasserstoff oder eine C₁-C₁₂-Alkylgruppe bedeuten, n+m=1, und p eine ganze Zahl ist, und wobei die beiden Comonomere statistisch verteilt oder blockiert sind, als Barriereschichtmaterial in einem Schlauch zum Transport von Wasserstoff mir einer Dichte von mindestens 24 kg/m³ und bevorzugt im Bereich von 35 bis 45 kg/m³.

Für das vorstehende gilt, dass Ausführungsformen oder Ausgestaltungen, die vorstehend als bevorzugt oder zweckmäßig für einen Aspekt der Erfindung beschrieben werden, ebenso als bevorzugt oder zweckmäßig für alle anderen beschrieben Aspekte gelten sollen, selbst wenn diese nicht explizit aufgeführt werden.

Die vorliegende Erfindung wird nachstehend unter Bezugnahme auf Beispiele und Vergleichsbeispiele ausführlicher beschrieben, jedoch ist die vorliegende Erfindung nicht darauf beschränkt.

### Beispiele

### Beispiel 1: Vergleich der Eigenschaften verschiedener Materialien für die Innenschicht eines Wasserstoff-Hochdruckschlauchs

Die für eine Hochdruckschlauchinnen- bzw. -Barriereschicht relevanten Eigenschaften sind in der folgenden Tabelle 1 mit anderen Materialien gegenübergestellt:

**Tabelle 1**

| Polymer | Schmelz-temperatur [°C] | Zugfestigkeit [MPa]¹ | Bruchdehnung [%]¹ | Kerbschlagzähigkeit [kJ/m²]² | Gasdurchlässigkeit [cm³/(m²*d)]³ |
|---|---|---|---|---|---|
| Polyketon | 222 | 56 | 250 | 16 | 1342 |
| PEEK | 340 | 95 | 25 | 7 | 2900 |
| PVDF | 164 | 12 | 50 | 100 | 1508 |
| POM-C | 166 | 64 | 30 | 6,5 | 277,5 |
| PA6 | 220 | 23 | 50 | 80 | 1820 |
| PA11 | 181 | 26 | 50 | 100 | 2545 |
| EVOH | 190 | 35 | 24 | 12 | 3,62 |
| FTPV | 220 | 24 | | | 6043 |

| | | | | | |
|---|---|---|---|---|---|
| 1 = bestimmt gemäß ISO 527; 2 = bestimmt gemäß ISO 179/1eA; 3 = bestimmt bei 30°C, 30 Bar, 0% rel. Luftfeuchtigkeit. | | | | | |

Wie aus Tabelle 1 ersichtlich wird, ist das aliphatische Polyketon in den Kategorien Zugfestigkeit, Kerbschlagzähigkeit und Gasdurchlässigkeit jeweils unter den Top-3, während andere Materialien in mindestens einer dieser Kategorien erheblich abfallen. Über alle Parameter hinweg zeigt das aliphatische Polyketon damit klare Vorteile. Zudem ermöglicht das aliphatische Polyketon aufgrund seiner Schmelztemperatur eine einfache Verarbeitung und ebenso eine ausreichende Temperaturbeständigkeit und erfüllt die (di)elektrischen Eigenschaftskriterien laut ISO 19880-5 (Abschnitt 7.18.4.: Criteria of electric properties of lining material).

### Beispiel 2: Herstellung eines erfindungsgemäßen Hochdruckschlauchs

Eine innere Schicht aus Polyketon wurde in einer Schichtdicke von 0,5 mm auf einen Dorn extrudiert. Auf dieser Schicht wurden anschließend vier Festigkeitsträgerlagen mit Verstärkungssträngen aus hochmolekularem Polyethylen aufgebracht. Auf diese Konstruktion wurde abschließend als Außenschicht eine Schicht aus thermoplastischem Polyurethan in einer Schichtdicke von 1,0 mm aufgebracht.

Ein Hochdruckschlauch mit analogem Aufbau wurde hergestellt, indem die Festigkeitsträgerlagen jeweils Metalldrähte oder ein elektrisch leitfähiges Textilgarn enthielten, und elektrische Aufladungen im Bereich der Verstärkung des Schlauchs zu vermeiden.

Die so hergestellten Schläuche waren bis zu einem Druck von 3500 bar stabil und zeigten eine ausreichende Dichtigkeit gegenüber Wasserstoff.

## Patentansprüche

1. Hochdruckschlauch mit einer Druckklassifizierung von H70 gemäß DIN ISO 19880-5 und/oder einem Berstdruck von mindestens 3500 bar, wobei der Schlauch einen Schichtaufbau mit einer inneren Barriereschicht, mindestens einer Festigkeitsträgerschicht und einer aus einem polymeren Werkstoff gebildeten äußeren Schicht aufweist und wobei die innere Barriereschicht aus einem aliphatischen Polyketon der Formel
[[-CHR₁CH₂(C=O)-]ₙ[-CHR₂CH₂(C=O)-]ₘ]ₚ
gebildet ist, wobei R₁ und R₂ voneinander verschieden sind und unabhängig voneinander Wasserstoff oder eine C₁-C₁₂-Alkylgruppe bedeuten, n+m=1, und p eine ganze Zahl ist, und wobei die beiden Comonomere statistisch verteilt sind oder als Blocks vorliegen.

2. Hochdruckschlauch nach Anspruch 1, wobei die Barriereschicht als innere Schicht mit einer Schichtdicke von mindestens 0,2 mm und weniger als 2,0 mm, und bevorzugt im Bereich von 0,5 bis 1,5 mm ausgebildet ist.

3. Hochdruckschlauch nach Anspruch 1 oder 2, wobei die Barriereschicht einen elektrische Leitfähigkeit vermittelnden Füllstoff enthält, vorzugsweise ausgewählt aus einem oder mehreren von Ruß, Kohlefasern, Carbon Nanotubes, mit Kohlenstoff beschichtete Keramikfasern, Kohlewhisker und Metallfasern, wie Aluminiumfasern, Kupferfasern, Messingfasern und Edelstahlfasern, bevorzugt in Form von Ruß oder einer Kombination von Ruß und Carbon Nanotubes.

4. Hochdruckschlauch mindestens einem der Ansprüche 1 bis 3, wobei das aliphatische Polyketon der Barriereschicht eine Gasdurchlässigkeit für Wasserstoff (H₂) von 1750 cm³/(m²*d) oder weniger (bestimmt gemäß DIN 53880 (2006) bei 30°C und 30 bar, 0% relative Feuchtigkeit)), insbesondere 1500 cm³/(m₂*d) oder weniger und bevorzugt 1350 cm³/(m₂*d) oder weniger aufweist.

5. Hochdruckschlauch nach mindestens einem der vorangehenden Ansprüche, wobei der Schlauch mindestens eine aus hochfesten organischen Fasern gebildete Festigkeitsträgerschicht aufweist, wobei die Fasern eine Zugfestigkeit, bestimmt gemäß DIN EN ISO 2062 , von mindestens 2 GPa aufweisen, wobei die organischen Fasern bevorzugt auf Polyparaphenylenbenzobisoxazol beruhen.

6. Hochdruckschlauch nach mindestens einem der vorangehenden Ansprüche, wobei der Schlauch mindestens eine aus Metalldraht gelbildete Festigkeitsträgerschicht aufweist, wobei der Metalldraht bevorzugt aus Stahl, Kupfer oder Kupferliegierung (gemäß JIS H 3260), Aluminum oder Aluminumlegierung (gemäß JIS H 4040), Magnesiumlegierung (gemäß JIS H 4203), Titan oder Titanlegierung (gemäß JIS H 4670) gebildet ist.

7. Hochdruckschlauch nach mindestens einem der vorangehenden Ansprüche, wobei die aus einem polymeren Werkstoff gebildeten äußere Schicht des Schlauchs aus einem Kautschuk oder einem thermoplastischen Material gebildet ist, wobei der Kautschuk oder das thermoplastische Material vorzugsweise ausgewählt ist aus Chloropren-Kautschuk, Chloroprenacrylat-Kautschuk, Butyl-Kautschuk, Ethylen-Propylen-Kautschuk, chlorosulfoniertem Polyethylen-Kautschuk, Polyurethan, Polyamid und Polyester.

8. Hochdruckschlauch nach mindestens einem der vorangehenden Ansprüche, wobei die aus einem polymeren Werkstoff gebildeten äußere Schicht Perforationen aufweist.

9. Hochdruckschlauch nach mindestens einem der vorangehenden Ansprüche, wobei der Schlauch einen Innendurchmesser von mindestens 6 mm und bevorzugt 7 mm bis 12 mm aufweist.

10. Verfahren zur Herstellung eines Hochdruckschlauchs gemäß mindestens einem der vorhergehenden Ansprüche, umfassend:
- Aufbringen einer Schicht aus aliphatischem Polyketon auf einen Dorn oder dornlos unter Ausbildung eines Polyketonschlauchs;
- Aufbringen von einer oder mehreren Festigkeitsträgerschichten auf dem Polyketonschlauch;
- Aufbringen einer äußeren Schicht aus einem polymeren Werkstoff auf die eine oder mehreren Festigkeitsträgerschichten.

11. Tankeinfüllvorrichtung umfassend einen Hochdruckschlauch gemäß einem der Ansprüche 1 bis 9.

12. Verwendung eines Hochdruckschlauchs gemäß mindestens einem der Ansprüche 1 bis 9 zum Überführen von Wasserstoff aus einem Vorratsbehälter in einen Tank, vorzugsweise einen Tank eines Fahrzeugs oder Flugzeugs oder Schiffs.

13. Verwendung eines aliphatischen Polyketons der Formel
[[-CHR₁CH₂(C=O)-]ₙ[-CHR₂CH₂(C=O)-]ₘ]ₚ
wobei R₁ und R₂ voneinander verschieden sind und unabhängig voneinander Wasserstoff oder eine C₁-C₁₂-Alkylgruppe bedeuten, n+m=1, und p eine ganze Zahl ist, und wobei die beiden Comonomere statistisch verteilt oder blockiert sind, als Barriereschichtmaterial in einem Schlauch zum Transport von Wasserstoff mit einer Dichte von mindestens 24 kg/m³ und bevorzugt im Bereich von 35 bis 45 kg/m³.

## Claims

1. High-pressure hose having a pressure classification of H70 according to **DIN** ISO 19880-5 and/or a burst pressure of at least 3500 bar, wherein the hose has a layered structure comprising an inner barrier layer, at least one strength member layer and an outer layer formed from a polymeric material and wherein the inner barrier layer is formed from an aliphatic polyketone of formula
[[-CHR₁CH₂(C=O)-]ₙ[-CHR₂CH₂(C=O)-]ₘ]ₚ,
wherein R₁ and R₂ are different from one another and independently represent hydrogen or a C₁-C₁₂-alkyl group, n+m=1, and p is an integer and wherein the two comonomers are statistically distributed or present as blocks.

2. High-pressure hose according to Claim 1, wherein the barrier layer is in the form of an inner layer having a layer thickness of at least 0.2 mm and less than 2.0 mm and preferably in the range from 0.5 to 1.5 mm.

3. High-pressure hose according to Claim 1 or 2, wherein the barrier layer contains a filler which imparts electrical conductivity, preferably selected from one or more of carbon black, carbon fibres, carbon nanotubes, carbon-coated ceramic fibres, carbon whiskers and metal fibres, such as aluminium fibres, copper fibres, brass fibres and stainless steel fibres, preferably in the form of carbon black or a combination of carbon black and carbon nanotubes.

4. High-pressure hose of at least one of Claims 1 to 3, wherein the aliphatic polyketone of the barrier layer has a gas permeability for hydrogen (H₂) of 1750 cm³/(m²*d) or less (determined according to DIN 53880 (2006) at 30°C and 30 bar, 0% relative humidity), especially 1500 cm³/(m₂*d) or less and preferably 1350 cm³/(m₂*d) or less.

5. High-pressure hose according to at least one of the preceding claims, wherein the hose has at least one strength member layer formed from high-strength organic fibres, wherein the fibres have a tensile strength, determined according to DIN EN ISO 2062, of at least 2 GPa, wherein the organic fibres are preferably based on polyparaphenylene benzobiisoxazole.

6. High-pressure hose according to at least one of the preceding claims, wherein the hose has at least one strength member layer formed from metal wire, wherein the metal wire is preferably made of steel, copper or copper alloy (according to JIS H 3260), aluminium or aluminium alloy (according to JIS H 4040), magnesium alloy (according to JIS H 4203), titanium or titanium alloy (according to JIS H 4670).

7. High-pressure hose according to at least one of the preceding claims, wherein the outer layer of the hose formed from a polymeric material is formed from a rubber or a thermoplastic material, wherein the rubber or the thermoplastic material is preferably selected from chloroprene rubber, chloroprene acrylate rubber, butyl rubber, ethylene-propylene rubber, chlorosulfonated polyethylene rubber, polyurethane, polyamide and polyester.

8. High-pressure hose according to at least one of the preceding claims, wherein the outer layer formed from a polymeric material has perforations.

9. High-pressure hose according to at least one of the preceding claims, wherein the hose has an internal diameter of at least 6 mm and preferably 7 mm to 12 mm.

10. Process for producing a high-pressure hose according to at least one of the preceding claims, comprising:
- applying a layer of aliphatic polyketone to a mandrel or without a mandrel to form a polyketone tube;
- applying one or more strength member layers to the polyketone tube;
- applying an outer layer of a polymeric material to the one or more strength member layers.

11. Tank filling apparatus comprising a high-pressure hose according to any of Claims 1 to 9.

12. Use of a high-pressure hose according to at least one of Claims 1 to 9 for transferring hydrogen from a storage vessel into a tank, preferably a tank of a vehicle or aircraft or ship.

13. Use of an aliphatic polyketone of formula
[[-CHR₁CH₂(C=O)-]ₙ[-CHR₂CH₂(C=O)-]ₘ]ₚ,
wherein R₁ and R₂ are different from one another and independently represent hydrogen or a C₁-C₁₂-alkyl group, n+m=1 and p is an integer and wherein the two comonomers are statistically distributed or blocked, as a barrier layer material in a hose for transporting hydrogen having a density of at least 24 kg/m³ and preferably in the range from 35 to 45 kg/m³.

## Revendications

1. Tuyau haute pression avec une classification de pression de H70 selon DIN ISO 19880-5 et/ou une pression d'éclatement d'au moins 3 500 bars, le tuyau présentant une structure stratifiée avec une couche barrière intérieure, au moins une couche de support de résistance et une couche extérieure formée d'un matériau polymère et la couche barrière intérieure étant formée d'une polycétone aliphatique de formule
[-CHR₁CH₂(C=O)-]ₙ[-CHR₂CH₂(C=O)-]ₘ]ₚ
dans laquelle R₁ et R₂ sont différents l'un de l'autre et signifient indépendamment l'un de l'autre l'hydrogène ou un groupe alkyle en C₁-C₁₂, n+m=1, et p est un nombre entier, et dans laquelle les deux comonomères sont distribués de manière aléatoire ou sont présents sous forme de blocs.

2. Tuyau haute pression selon la revendication 1, la couche barrière étant réalisée sous forme de couche intérieure avec une épaisseur de couche d'au moins 0,2 mm et inférieure à 2,0 mm, et de préférence dans la plage de 0,5 à 1,5 mm.

3. Tuyau haute pression selon la revendication 1 ou 2, la couche barrière contenant une charge conférant une conductivité électrique, de préférence choisie parmi un ou plusieurs parmi le noir de carbone, les fibres de carbone, les nanotubes de carbone, les fibres céramiques revêtues de carbone, les trichites de carbone et les fibres métalliques, telles que les fibres d'aluminium, les fibres de cuivre, les fibres de laiton et les fibres d'acier inoxydable, de préférence sous la forme de noir de carbone ou d'une combinaison de noir de carbone et de nanotubes de carbone.

4. Tuyau haute pression au moins selon l'une quelconque des revendications 1 à 3, la polycétone aliphatique de la couche barrière présentant une perméabilité aux gaz pour l'hydrogène (H₂) de 1 750 cm³/(m²*d) ou moins (déterminée selon la norme DIN 53880 (2006) à 30 °C et 30 bars, 0 % d'humidité relative)), notamment 1 500 cm³/(m₂*d) ou moins et de préférence 1 350 cm³/(m₂*d) ou moins.

5. Tuyau haute pression selon au moins l'une quelconque des revendications précédentes, le tuyau présentant au moins une couche de support de résistance formée de fibres organiques à haute résistance, les fibres présentant une résistance à la traction, déterminée selon la norme DIN EN ISO 2062, d'au moins 2 GPa, les fibres organiques étant de préférence à base de polyparaphénylènebenzobisoxazole.

6. Tuyau haute pression selon au moins l'une quelconque des revendications précédentes, le tuyau présentant au moins une couche de support de résistance formée d'un fil métallique, le fil métallique étant de préférence formé d'acier, de cuivre ou d'un alliage de cuivre (selon la norme JIS H 3260), d'aluminium ou d'un alliage d'aluminium (selon la norme JIS H 4040), d'un alliage de magnésium (selon la norme JIS H 4203), de titane ou d'un alliage de titane (selon la norme JIS H 4670).

7. Tuyau haute pression selon au moins l'une quelconque des revendications précédentes, la couche extérieure du tuyau, formée d'un matériau polymère, étant formée d'un caoutchouc ou d'un matériau thermoplastique, le caoutchouc ou le matériau thermoplastique étant de préférence choisi parmi le caoutchouc chloroprène, le caoutchouc acrylate de chloroprène, le caoutchouc butyle, le caoutchouc éthylène-propylène, le caoutchouc polyéthylène chlorosulfoné, le polyuréthane, le polyamide et le polyester.

8. Tuyau haute pression selon au moins l'une quelconque des revendications précédentes, la couche extérieure formée d'un matériau polymère présentant des perforations.

9. Tuyau haute pression selon au moins l'une quelconque des revendications précédentes, le tuyau présentant un diamètre intérieur d'au moins 6 mm et de préférence de 7 mm à 12 mm.

10. Procédé de fabrication d'un tuyau haute pression selon au moins l'une quelconque des revendications précédentes, comprenant :
- l'application d'une couche de polycétone aliphatique sur un mandrin ou sans mandrin en réalisant un tube de polycétone ;
- l'application d'une ou plusieurs couches de support de résistance sur le tube de polycétone ;
- l'application d'une couche extérieure d'un matériau polymère sur les une ou plusieurs couches de support de résistance.

11. Dispositif de remplissage de réservoir comprenant un tuyau haute pression selon l'une quelconque des revendications 1 à 9.

12. Utilisation d'un tuyau haute pression selon au moins l'une quelconque des revendications 1 à 9 pour transférer de l'hydrogène d'un récipient de stockage vers un réservoir, de préférence un réservoir d'un véhicule ou d'un aéronef ou d'un navire.

13. Utilisation d'une polycétone aliphatique de formule
[[-CHR₁CH₂(C=O)-]ₙ[-CHR₂CH₂(C=O)-]ₘ]ₚ
dans laquelle R₁ et R₂ sont différents l'un de l'autre et signifient indépendamment l'un de l'autre l'hydrogène ou un groupe alkyle en C₁-C₁₂, n+m=1, et p est un nombre entier, et dans laquelle les deux comonomères sont distribués de manière aléatoire ou en blocs, en tant que matériau de couche barrière dans un tuyau pour le transport d'hydrogène ayant une densité d'au moins 24 kg/m³ et de préférence dans la plage de 35 à 45 kg/m³.
